# FASCICULE DE BREVET EUROPEEN

(11) **EP 0 611 217 B1**
(45) Date de publication et mention de la délivrance du brevet: **07.10.1998**
(21) Numéro de dépôt: 94400295.5
(22) Date de dépôt: 10.02.1994
(51) Int. Cl.: B23K 9/127, B23Q 35/128

(54) **Machine automatique de soudage "in situ" suivant un profil à tronçon curviligne, et avec commande programmable d'extrapolation**
Automatische ''in situ'' Schweissmaschine zum Folgen von gekrümmten Konturen, und mit einer Programmiersteuerung zum Extrapolieren
Automatic 'in situ' welding machine permitting to follow a curved part, and having an extrapolation programmable command

(30) Priorité: 12.02.1993 FR 9301619
(43) Date de publication de la demande: 17.08.1994
(73) Titulaire: SOCIETE NOUVELLE TECHNIGAZ, 78180 Montiny-le-Bretonneux (FR)
(72) Inventeur: Gainand, Yves François Gaston, F-78180 Montigny le Bretonneux (FR)
(74) Mandataire: Berger, Helmut

(56) Documents cités:
- EP-A- 0 266 424
- EP-A- 0 323 279
- EP-A- 0 512 583
- EP-A- 0 520 893
- EP-A- 0 520 894
- ROBOTERSYSTEME, vol.5, no.4, Décembre 1989, BERLIN (DE) pages 213 - 218, XP000127448 DREWS ET AL. 'Echtzeit-Bahnplanung eines Roboters unter Sensoreinsatz'

## Description

L'invention concerne une machine automatique de soudage de pièces métalliques que l'on souhaite assembler, selon le préambule de la revendication 1.

Une machine de ce type est connue par le document EP 0 520 893. Cette machine est réalisée sous forme d'un système à ordinateur assisté, basé sur l'apprentissage prenant en compte des cas de soudage déjà traités et comprenant une caméra vidéo pour des prises de vue d'une scène de soudage en cours, ainsi que des moyens permettant l'analyse de chacune de ces prises de vue en fonction des paramètres préalablement établis.

Cette machine présente l'inconvénient majeur d'être lourde et encombrante, de sorte qu'elle puisse être difficilement utilisée pour le soudage de pièces à demeure ou "in situ", c'est-à-dire à la place même où les pièces seront employées.

Par conséquent, la présente invention a pour but de proposer une machine automatique de soudage "in situ", qui soit précise, rapide et légère, afin de pallier les inconvénients énoncés plus hauts de l'art antérieur.

Pour atteindre ce but, la machine de soudage selon l'invention comporte les caractéristiques énoncées dans la partie caractérisante de la revendication 1.

Le document "Robotersysteme" 5(1989) Décembre, n^{o} 4, Berlin, DE décrit déjà une machine de soudage équipée de moyens comparables à un télémètre de localisation. Mais ce système de mesure n'est pas utilisé pour déterminer seulement un changement de la distance entre la machine et l'une des pièces, mais pour permettre la détermination de la trajectoire d'un contour à l'aide des valeurs de mesures, dans le but d'assurer un guidage de la torche le long du contour. Pour permettre le guidage aussi bien du capteur que de la torche sur le contour, le télémètre est monté mobile sur une unité de déplacement spécifique supplémentaire, qui est pourvue de deux axes translatoires.

En raison de cette fonction spécifique du capteur, la structure de la machine doit présenter la complexité qui vient d'être décrite et que l'invention évite grâce aux caractéristiques indiquées dans la partie caractérisante de la revendication 1.

Mais encore d'autres caractéristiques et avantages de l'invention ressortiront mieux de la description détaillée d'un mode de réalisation, donné uniquement à titre d'exemple, qui suit et se réfère aux dessins annexés, dans lesquels :
La figure 1 est une vue partielle en élévation de face, d'une machine conforme à l'invention.
La figure 2 est une vue en perspective d'un exemple de pièces à assembler à l'aide de la machine de la figure 1, et définissant les principaux axes de référence de celle-ci.
La figure 3 est une vue en section suivant la ligne III-III de la figure 1.
La figure 4 est une vue suivant la flèche IV de la figure 1.
La figure 5 est une vue partielle suivant la flèche V de la figure 4.
La figure 6 est une vue partielle suivant la flèche VI de la figure 4, et illustrant un mécanisme d'ancrage rapide d'une machine conforme à l'invention.
La figure 7 est une vue schématique représentant l'ensemble de la machine conforme à l'invention.

La figure 8 représente schématiquement un tronçon curviligne d'un profil de pièce à souder, ainsi que des points de passage mémorisés et les positions correspondantes de la torche de soudage d'une machine conforme à l'invention.

La figure 9 est une vue similaire à la figure 8, qui illustre la façon dont le dispositif de commande extrapole des courbes permettant de définir chaque position successive de la torche d'une machine conforme à l'invention, au niveau du tronçon curviligne.

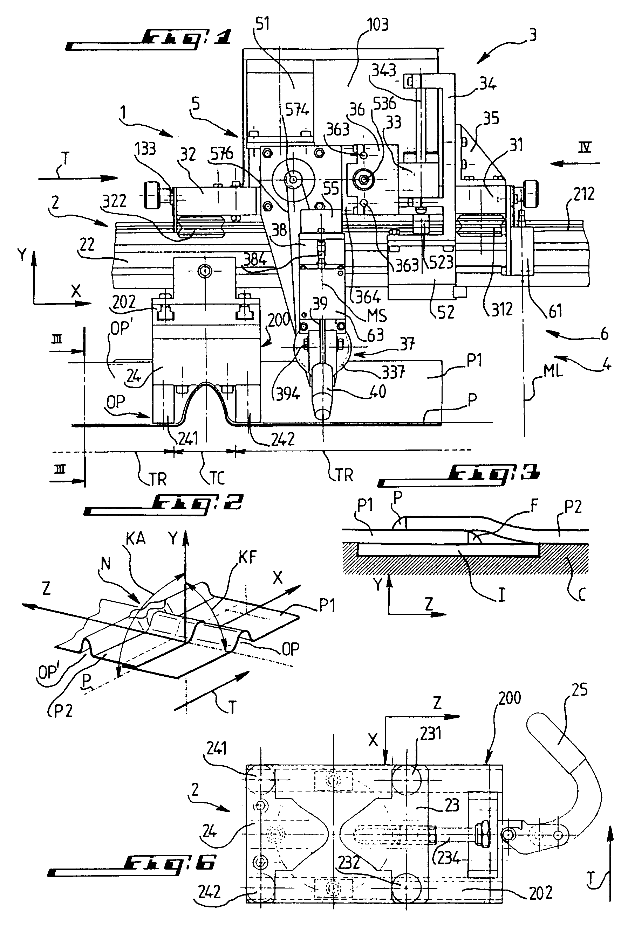

En se reportant aux figures 1, 4, 5 et 7, on voit une machine automatique 1 permettant d'assembler au moins deux pièces métalliques telles que P1 et P2, suivant un profil P qui est commun aux diverses pièces à assembler.

La machine 1 comporte un support 2, fixe par rapport aux pièces P1 et P2, et donc au profil P. Un chariot 3 est monté mobile sur le support 2, et est guidé par celui-ci de façon à pouvoir être déplacé dans un sens ou dans l'autre, suivant une trajectoire T dite "d'avance". Une torche 40 qui fait partie d'une installation ou poste de soudage 4 (figure 7) est montée mobile et guidée sur le chariot d'avance 3. Bien sur, la machine 1 comporte un système de déplacement 5, grâce auquel d'une part le chariot 3, et d'autre part la torche de soudage 40, peuvent être déplacés par rapport au profil P des pièces P1 et P2, suivant les guidages prévus entre le support 2, le chariot 3 et la torche 40.

Par ailleurs, la machine automatique 1 est pourvue de moyens de détection 6 de la position de la torche 40 par rapport aux pièces à assembler P1 et P2, ainsi que d'un dispositif de commande 7, visible sur la figure 7. Il ressort de cette figure que le dispositif 7, qui est programmable, est notamment connecté aux moyens de détection 6, au système de déplacement 5 et au poste de soudage 4. De fait, le dispositif 7 peut commander le fonctionnement du poste 4, et donc de la torche 40, ainsi que du système 5, sur la base des informations fournies par les moyens de détection 6 entre autres, afin de réaliser une soudure le long du profil P.

Maintenant, un mode de réalisation de machine de soudage 1 conforme à l'invention va être expliqué en détail.

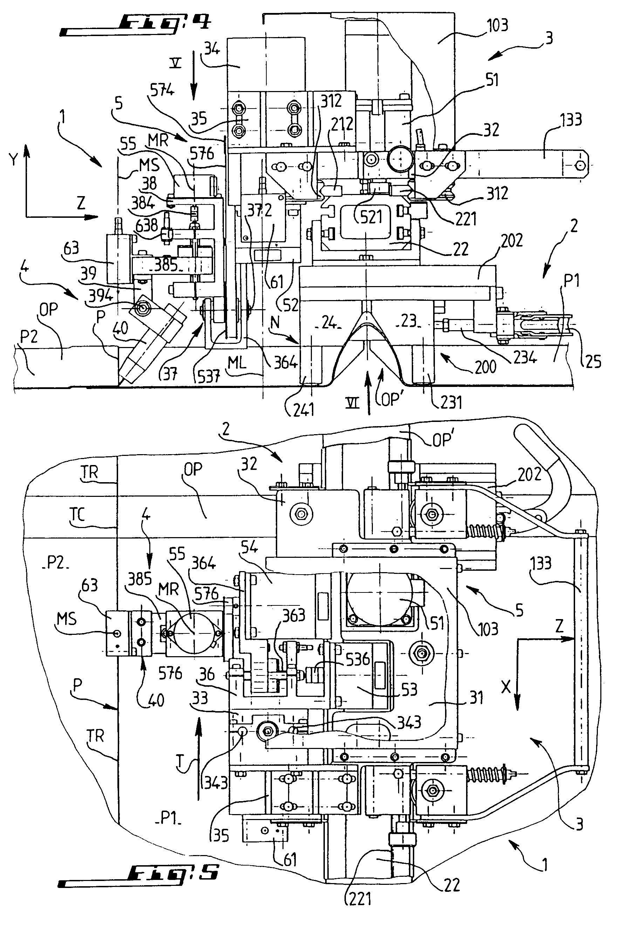

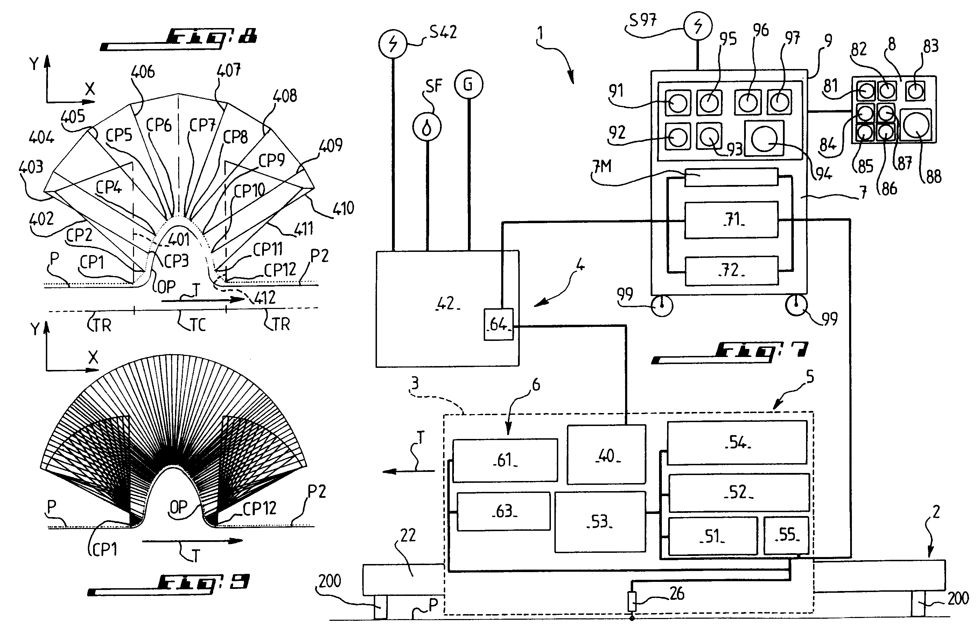

Suivant l'exemple illustré, la machine 1 permet d'effectuer "in situ", c'est-à-dire à demeure, un cordon de soudure s'étendant entre les pièces P1 et P2, suivant le profil P. Les pièces désignées en P1 et P2 sont deux tôles en acier austenitique, qui font partie d'une cloison, membrane ou analogue fixée sur une couche de support C, par l'intermédiaire d'une pluralité d'inserts métalliques I, comme on le voit bien sur la figure 3. Chaque insert I est fixé dans la couche C et permet l'application d'une soudure discontinue F, pour immobiliser l'une des tôles P1 ou P2 sur la couche C. Il va de soi que d'autres types de pièces, ainsi que d'autres matériaux métalliques peuvent être soudés par la machine 1, et que les tôles décrites ici ne constituent qu'un exemple non limitatif.

Par ailleurs, on remarque que chaque tôle P1 ou P2 vient en contact avec la couche C (et éventuellement un insert I) suivant un plan "de pose". Ce plan de pose qui peut s'étendre à la verticale, à l'horizontale ou suivant toute autre orientation de la couche C, définit deux axes de référence X et Z, faisant partie d'un repère X, Y, Z par rapport auquel la machine 1 va être décrite. Le troisième axe Y du repère X, Y, Z est directement perpendiculaire au plan de pose XZ comme ceci ressort bien de la figure 2 notamment.

Toujours sur cette figure, on remarque que des bossages OP et OP' sensiblement rectilignes et à section en forme U renversé, sont formés sur les tôles ou pièces P1 et P2. Ces bossages ou ondes OP et OP' font saillie du plan X, Z, suivant Y et donc de la face des pièces P1 et P2 opposée à la couche C. Les ondes OP sont à peu près parallèles à l'axe Z et ont une dimension ou "hauteur" suivant Y, qui est inférieure à la hauteur des ondes OP'. Les ondes OP' qui sont appelées grandes ondes, s'étendent à peu près parallèlement X, et donc perpendiculairement aux petites ondes OP. On comprend que les tôles P1 et P2 font partie, une fois qu'elles sont assemblées, d'une paroi ou membrane, par exemple pour un réservoir de confinement de fluide, et au sein de laquelle les grandes et petites ondes se croisent à angle droit, pour constituer des noeuds N, tel que celui que l'on voit sur la figure 2.

Au vu des figures 2 et 3, il apparait que les tôles P1 et P2 sont disposées "à clin" l'une par rapport à l'autre, c'est-à-dire se chevauchent. Le profil P est défini par le rebord de la tôle supérieure, et par la surface opposée à C de la tôle inférieure, au niveau du chevauchement de celles-ci. Ici, le profil P entre le rebord de la tôle P2 et la surface supérieure de la tôle P1 s'étend suivant un plan d'enveloppe sensiblement perpendiculaire au plan de pose XZ et parallèle à Y. Néanmoins, il convient de noter que contrairement au présent exemple, l'enveloppe du profil de soudage peut ne pas être plane, et que cette hypothèse a été choisie dans le but de simplifier la présente description seulement. Ainsi, l'enveloppe du profil suivant lequel la machine 1 conforme à l'invention réalise une soudure, peut par exemple être cylindrique, tronconique ou autres.

Similairement, on remarque que la trajectoire d'avance T est sensiblement parallèle à l'axe de référence X sur les figures. Toutefois, on comprend que si l'enveloppe du profil P n'est pas plane, cette trajectoire T ne sera pas rectiligne.

Par ailleurs, puisque le profil P s'étend à peu près parallèlement à X et que les petites ondes OP sont orientées sensiblement suivant Z, le profil P présente au moins un tronçon curviligne TC, au niveau de son intersection avec l'une des ces ondes. Il va de soi que le profil P comportera autant de tronçons curvilignes TC qu'il croisera d'ondes. De même, on voit bien que ce profil P comporte en outre, au moins un tronçon rectiligne TR. En fait, le profil P possède au moins deux tronçons rectilignes TR, qui sont alignés les uns avec les autres et sensiblement parallèles à la trajectoire T ainsi qu'à l'axe X.

Comme indiqué plus haut, la machine 1 se différencie de l'art antérieur essentiellement en ce que les moyens de détection 6 comportent un télémètre de localisation, dont une tête de détection 61 permet de mesurer une distance choisie entre la machine 1 et l'une des pièces à souder P1 ou P2 (et éventuellement les deux pièces). Cette distance est choisie pour être comprise en dehors d'un intervalle donné, au niveau d'un tronçon curviligne TC du profil P.

Ici, le télémètre de localisation est un télémètre laser, c'est-à-dire dont la tête de détection 61 comprend un émetteur de faisceaux laser, ainsi qu'un récepteur et un boîtier de contrôle (non représentés) . L'émetteur est par exemple une source lumineuse à laser semi-conducteur, d'une puissance de l'ordre de 5 mW, et capable de mesurer une distance choisie inférieure à 100 mm avec une précision comprise entre 10µ et 0,7 mm. La tête 61 est montée sur le chariot 3, en amont par rapport à la torche 40 suivant le sens d'avance de celui-ci, et en regard de la pièce P1. Cette tête 61 est orientée pour mesurer une distance suivant la direction désignée en ML sur les figures 1 et 4, qui est approximativement parallèle à l'axe Y.

Ainsi, les faisceaux émis (de façon intermitente, à peu près toutes les ms) par l'émetteur 61 sont réfléchis sur la pièce P1 et renvoyés au récepteur du télémètre. La tête 61 étant reliée au boîtier de contrôle (par exemple disposé à proximité de l'automate 7, dans une armoire 9, telle que celle qui est visible sur la figure 7), le récepteur mesure la longueur d'onde et/ou le diamètre de chaque faisceau qu'il reçoit, puis transmet au boîtier un signal analogique correspondant à cette mesure. Le boîtier indique alors, par l'intermédiaire d'un transcodeur analogique numérique, une valeur correspondante à la mesure en question du dispositif de commande 7. On notera ici que suivant l'exemple illustré, le diamètre du faisceau détecté par la tête 61 est de l'ordre de 0,2 à 2 mm, tandis que sa longueur d'onde au niveau du centre d'oscillation de l'émetteur, est d'à peu près 780 nm. Evidemment, d'autres types de télémètres peuvent être aussi employés, comme par exemple à capteur à courant induit ou analogues.

On comprend que si les faisceaux émis par la tête 61 sont réfléchis par la pièce P1, lorsque le chariot 3 déplace cette tête en regard d'une onde OP ou OP', la distance que l'on désire mesurer entre l'émetteur et le point de réflexion du faisceau émis diminue d'une valeur égale à la dimension suivant ML (ou Y) de cette onde. Une telle diminution entraîne des variations proportionnelles du diamètre et de la longueur d'onde du faisceau laser, qui sont prises en compte par le récepteur pour permettre de déterminer la distance à mesurer.

Ensuite, sur la base de ces variations de distance, il est aisé de déterminer la présence, l'emplacement et éventuellement le type de l'onde rencontrée par les faisceaux laser. Par exemple, si cette distance n'est pas comprise dans un intervalle dont les bornes correspondent aux valeurs maximales et minimales de la distance choisie avec une différence d'amplitude de l'ordre de 0,5 à 5 mm mesuré au niveau d'un tronçon rectiligne TR, le télémètre de localisation fournit au dispositif de commande 7 une information correspondant. à la détection d'une onde. Alors, en fonction de cette information, le dispositif 7 détermine la présence et l'emplacement par rapport au profil P, d'un tronçon curviligne TC rencontré par le faisceau laser.

C'est notamment dans ce but que le dispositif programmable 7 est pourvu d'une mémoire 7M, et de premiers moyens de calcul 71. En fait, le dispositif 7 peut être constitué par un ordinateur personnel de type industriel, ou de préférence par un automate conventionnel, constitué par des cartes électroniques implantées sur une carte mère elle-même disposée dans l'armoire 9. Chaque carte étant attribuée à une commande prédéterminée, peut comporter un processeur, des mémoires vives et mortes, des interfaces analogiques et numériques pour l'acquisition et l'émission de données, des interfaces de puissance, avec par exemple des relais électriques de pilotage.

En outre, la mémoire 7M est prévue pour enregistrer les coordonnées relatives de points de passage répartis sur le tronçon curviligne TC défini par chaque onde OP ou OP' croisée par le profil de soudage P. Avec la machine 1 illustrée, un profil P donné ne croise qu'un seul type d'onde, à savoir petite (OP) ou grande (OP'). Aussi, les coordonnées de points de passage répartis sur deux formes ou types d'ondes seulement, doivent être enregistrées dans la mémoire 7M du dispositif de commande. Ce dernier est relié à un commutateur bistable de sélection 87, grâce auquel le type d'onde, et donc de tronçon curviligne TC, présent sur sur le profil P à souder, est indiqué au dispositif 7. Toutefois, il est envisageable que les coordonnées de points de passage d'un nombre plus important de formes différentes de tronçons TC soient mémorisées dans le dispositif 7, et que ce dernier puisse déterminer à l'aide des premiers moyens de calcul 71, l'emplacement et la forme de chaque tronçon curviligne rencontré sur un profil P.

Par l'expression "coordonnées relatives", on entend que les positions des points de passage de chaque tronçon TC mémorisées, sont enregistrées en fonction d'un repère similaire à XYZ, mais dont l'origine est différente. Autrement dit, tous les points de passage d'un même tronçon TC ont leurs coordonnées mémorisées les uns par rapport aux autres. Aussi, la localisation de ces points de passage effectuée par les premiers moyens de calcul 71, consiste à déterminer en fonction des informations fournies par le télémètre 61 de localisation, les coordonnées de ces points dans le même repère XYZ que le profil P.

Suivant l'exemple de la figure 8, douze points de passage repérés en CP1 à CP12 sont répartis suivant le sens de T, à peu près régulièrement le long d'un tronçon curviligne TC défini par une petite onde OP. On remarque que les points de passage CP1 et CP12 sont les points de jonction du tronçon TC correpondant, avec les tronçons voisins du même profil P. Les points de passage pour une grande onde OP' sont sensiblement similaires à ceux d'une petite onde.

Une fois la localisation évoquée plus haut effectuée, les premiers moyens de calcul 71 doivent encore définir, par extrapolation circulaire entre les points de passage voisins d'un tronçon TC (à savoir CP1 et CP2, CP2 et CP3, ..., CP11 et CP12, suivant l'exemple des figures 8 et 9), une série c'est-à-dire un nombre donné de points qui définissent des courbes reliant les points de passage voisins et sensiblement confondues avec le tronçon curviligne TC correspondant.

Cette extrapolation circulaire est effectuée par les premiers moyens de calcul 71 de manière similaire à celle d'une machine-outil à commande numérique. Chacune de ces courbes est décomposée en un nombre de points correspondant à des positions successives de la torche 40 lors de son déplacement au niveau du tronçon curviligne TC qu'elle rencontre. L'espace entre les points des courbes extrapolées est défini la précision du pas entre deux positions successives de la torche 40 pouvant être obtenu par le système de déplacements 5. Alors, l'interpolation ou extrapolation circulaire consiste à trouver, pour un vecteur vitesse de déplacement constant de la torche 40, le rayon d'un cercle ou d'une courbe dont un secteur d'arc reliant les deux points de passage choisis, est sensiblement confondu avec la partie correspondante du tronçon curviligne TC. Autrement dit, les premiers moyens de calcul 71 déterminent en fonction d'une vitesse de déplacement constante de la torche 40, d'un pas défini entre les positions successives de celle-ci, et la position de deux points de passage localisés par rapport au reste du profil P, le rayon et l'angle qui définissent un arc de cercle ou courbe, approximativement confondu avec la partie correspondante du tronçon TC choisi, ou tout au moins approprié pour le soudage à effectuer sur cette partie de tronçon. En se reportant aux figures 8 et 9, on comprend que cette extrapolation circulaire permet de définir la position de chacun des points situés entre les points de passage CP1 et CP12 qui sont visibles sur la figure 9 et qui suivent, à une distance à peu près constante, la forme de l'onde OP. La vitesse de déplacement de la torche 40 au niveau d'un tronçon curviligne TC peut être de l'ordre de 2,5 à 3,5 mm par seconde.

Il convient de noter ici que, si la vitesse de déplacement de la torche 40 n'est pas égale à la valeur choisie pour le franchissement d'un tronçon curviligne, en aval de ce tronçon suivant le sens et la direction de la trajectoire T, on prévoit au niveau du tronçon précédant du profil P, une zone d'ajustement de cette vitesse. Ainsi, suivant l'exemple illustré, la vitesse de déplacement de la torche 40 est de l'ordre 6 à 10 mm par seconde au niveau des tronçons rectilignes. Par conséquent, puisque chaque tronçon curviligne TC est précédé et suivi, suivant le sens et la direction de la trajectoire T, par un tronçon rectiligne TR, une zone de décélération et une zone d'accélération sont prévues de part et d'autre de chaque onde rencontrée par le profil. Comme on l'expliquera ultérieurement, ces zones d'accélération et de décélération du profil P permettent également d'ajuster l'inclinaison de la torche 40 par rapport au profil P à souder.

En se reportant à nouveau aux figures 1, 4 et 5, vont être décrits les éléments structurels permettant à la machine 1 d'obtenir, qu'à chacun des points des courbes définis par les premiers moyens de calcul 71, le système de déplacement 5 fasse correspondre l'une des positions successives de la torche 40, au niveau d'un tronçon curviligne TC donné.

Ici, le chariot 3 comprend un châssis essentiellement constitué par deux traverses 31 et 32, de préférence réalisées dans un alliage léger, tel que par exemple l'aluminium. Le châssis constitué par les traverses 31 et 32 est guidé sur le support fixe 2 suivant la direction de l'axe X, et déplacé par un premier organe d'entraînement 51 suivant la trajectoire T. Par ailleurs, la torche 40 est rendue solidaire du chariot 3, et plus précisément de la traverse 31, à l'aide d'un plateau 33, lui-même monté à coulissement sur la traverse 31. Plus précisement, une glissière à colonnes 34, dont l'axe de coulissement est sensiblement parallèle à l'axe de référence Y, est fixée sur la traverse 3, par l'intermédiaire d'une équerre vissée 35. La glissière 34 présente a peu près la forme d'une potence, et est de préférence réalisée dans un alliage léger tel qu'aluminium. Le plateau 33 est monté à coulissement et guidé sur la potence de la glissière 34, par l'intermédiaire d'une paire de colonnes de guidage 343 en acier. Les colonnes de guidage 343 sont orientées suivant la direction de l'axe Y et disposées de part et d'autre d'un arbre d'entraînement fileté 523, orienté suivant Y et monté à rotation sur la potence de la glissière 34. Cet arbre 523 est vissé à travers une douille à billes ou filetée (non représentée) fixée sur le plateau 33. Par conséquent, toute rotation dans un sens donné de l'arbre 523 provoque un coulissement de sens correspondant suivant Y du plateau 33, et donc de la torche 40. L'arbre d'entraînement 523, ainsi qu'un second organe d'entraînement 52 dont cet arbre est solidaire en rotation, font partie du système d'entraînement 5 de la machine 1. Suivant l'exemple illustré, le premier organe d'entraînement 51 est fixé sur la traverse 31 du chariot 3, et coopère avec le support fixe 2 afin de déplacer ce chariot, comme ceci sera mieux expliqué ultérieurement.

Suivant l'exemple illustré, les premiers et seconds organes d'entraînement sont constitués par des moteurs électriques pas à pas sans balai, de type hybride.

Plus précisement, il sera avantageux d'utiliser des moteurs pas à pas ayant une résolution de l'ordre de 200 pas par révolution, et donc avec un angle de rotation minimal de 1,8°. Le courant par phase applicable à un tel moteur est un courant continu redressé et filtré. Ce courant est déterminé en fonction du couple que le moteur doit être capable de développer, et son alimentation peut être effectuée par une commande bipolaire à découpage de fréquence, fournissant du courant sous une tension d'à peu près 28V à chacune des bobines de ce moteur.

Au vu de ce qui vient d'être dit, on comprend bien que la torche 40 peut être déplacée suivant Y par rapport aux pièces P1 et P2, à l'aide de l'organe d'entraînement 52, qui constitue donc l'organe d'élévation de la torche 40. Puisque le moteur 51 permet le déplacement du chariot 3 suivant la direction T, ce moteur assure l'entraînement de la torche 40 suivant l'axe X. Etant donné que les premiers moyens de calcul 71 sont reliés et commandent le système d'entraînement 5, dont font partie l'organe d'élévation 52 et le moteur 51 dit moteur d'avance, la machine 1 peut déplacer la torche 40 jusqu'à n'importe quel point de l'enveloppe du profil P parallèle au plan XY, de sorte que l'extrémité libre de cette torche peut suivre le profil P qui est compris dans cette enveloppe, en combinant les mouvements suivants X et Y provoqués par le système d'entraînement 5.

Par ailleurs, un élément coulissant 36 est interposé entre le plateau 33 du chariot 3, et la torche 40. Cet élément coulissant comporte, à l'instar de la glissière 34, deux colonnes de guidage acier 363 et un arbre d'entraînement en acier fileté 536. Cependant, les colonnes de guidage 363 et l'arbre d'entraînement 536 sont orientées à peu près parallèlement à l'axe Z, c'est-à-dire perpendiculairement au plan XY. Cette direction sensiblement parallèle à l'axe Z et suivant laquelle l'élément 36 permet de guider à coulissement la torche 40, est appelée direction de suivi. Ce guidage est obtenu à l'aide d'une patte 364 sur laquelle la torche 40 est montée et qui possède une douille à billes ou filetée (non représentée) à l'intérieur de laquelle l'arbre d'entraînement 536 est vissé. On voit bien sur la figure 5 que les colonnes de guidage 363 de l'élément 36 sont logées dans des alésages correspondants de la patte 364, afin de guider celle-ci suivant leur direction longitudinale. Il est clair alors que toute rotation dans un sens ou dans l'autre de la barre d'entraînement 536, entraîne un coulissement suivant l'axe Z de la torche 40, et ce dans un sens correspondant au sens de rotation et au pas du filetage de la barre 536.

A cet effet, le système d'entraînement 5 comprend un troisième organe d'entraînement 53, qui est fixé sur la potence grâce à laquelle l'arbre 536 est monté à rotation. Cet arbre 536 est solidaire en rotation du troisième organe d'entraînement 53. Cet organe d'entraînement 53 est avantageusement constitué par un moteur électrique pas à pas similaire à ceux qui ont été décrits plus haut.

Mais contrairement aux organes 51 et 52, l'organe 53 est agencé de façon à entraîner la patte 364 et donc la torche 40, au moins lorsque cette dernière est déplacée au niveau d'un tronçon rectiligne TR du profil P, de part et d'autre de ce profil suivant la direction de suivi, alternativement dans un sens puis dans le sens opposé. En d'autres termes, l'organe d'entraînement 53 provoque un mouvement de la torche 40, tel que celle-ci décrit une trajectoire ondulée dans un plan parallèle au plan XZ, et dont les ondulations ont une amplitude de quelques millimètres au plus, et de préférence de l'ordre de 0,3 mm.

En outre, les moyens de détection 6 comprennent un télémètre de suivi 63, auquel l'organe 53 est asservi. Le télémètre 63 est solidaire suivant la direction de Z de la torche 40, et du chariot 3 suivant la direction X. Suivant l'exemple illustré, ce télémètre 63 est à peu près identique au télémètre de localisation 61, à l'exception de ce qu'il effectue une mesure suivant une direction MS à peu près parallèle à la direction ML. Le télémètre de suivi 63 est apte à détecter la présence du profil P au droit de la torche 40, grâce à la mesure d'une différence de la distance entre sa tête de détection et le point de réflexion du faisceau laser émis par cette tête. Or, comme on l'a expliqué plus haut, puisque les tôles P1 et P2 sont soudées à clin, celles-ci forment au niveau du profil P, un palier sensiblement égal à l'épaisseur de la pièce supérieure, suivant la direction Y. De fait, chaque variation de la distance mesurée par le télémètre 63 qui est sensiblement égale ou supérieure à la dimension du palier formé par les deux pièces P1 et P2 au niveau du profil P, permet à la tête de détection et au boîtier de contrôle du télémètre de suivi 63 de générer un signal indiquant au troisième organe d'entraînement 53 que la torche 40 vient de passer au droit de ce profil P. Ce troisième organe d'entraînement 53 étant asservi au télémètre de suivi 63, à chaque détection par ce dernier du profil P, le sens d'entraînement de la torche 40 par cet organe 53 est inversé. Un tel asservissement permet à la torche 40 de suivre le profil P avec précision et d'éviter les déviations de cette torche suivant la direction de Z. On notera ici que suivant le mode de réalisation illustré, le moteur pas à pas 53 entraîne un va-et-vient de la torche 40 seulement au niveau des tronçons rectilignes TR, et ne fonctionne pas au niveau des tronçons curvilignes TC, bien que ceci soit parfaitement possible.

Maintenant, les éléments structurels de la machine 1 qui permettent d'ajuster automatiquement l'orientation de la torche 40 vont être décrits. Suivant le mode de réalisation illustré, la torche 40 est montée sur le chariot 3 par l'intermédiaire d'une articulation d'orientation 37. Plus précisement, l'articulation d'orientation 37 relie la torche 40 à une partie de la patte 364, qui présente la forme d'un U, comme on le voit bien sur la figure 4. L'articulation 37 comprend un arbre 372, monté à rotation entre les deux branches définies par la partie en U de la patte 364. Une pièce 38 qui sera décrite ultérieurement et sur laquelle la torche 40 est montée, est rendue solidaire en rotation de l'arbre 372. Ainsi, la torche de soudage 40 peut basculer autour d'un axe sensiblement parallèle à Z. Une poulie 537, de préférence crantée, est également solidaire en rotation de l'axe 372. Cette poulie 572 est reliée à une autre poulie éventuellement crantée 574 par une courroie 576, de préférence crantée. On voit notamment sur la figure 1 que la poulie 574 est montée à rotation autour d'un axe sensiblement parallèle à Z, sur une partie de la patte 364 formant plaque de support et s'étendant suivant un plan approximativement parallèle au plan XY. C'est sur cette plaque de support de la patte 364 qu'est fixé un quatrième organe d'entraînement 54 (figure 5). Ici encore, l'organe d'entraînement 54 est constitué par un moteur pas à pas similaire à ceux désignés en 51, 52 et 53. D'après la figure 5, on comprend que l'axe de sortie, sensiblement parallèle à Z du moteur d'entraînement 54, est solidaire en rotation de la poulie 574. De fait, lorsque le moteur 54 tourne dans un sens ou dans l'autre, la courroie 576 entraîne en rotation suivant un sens correspondant la poulie 537 et la pièce 38. Cette rotation de la pièce 38 entraîne un changement correspondant de l'orientation de la torche 40 par rapport au support fixe 2.

Il va de soi que l'organe d'entraînement 54, les poulies 574 et 537, ainsi que la courroie 576 font partie du système d'entraînement 5 de la machine 1. Par conséquent, l'organe 54 est commandé par le dispositif de commande 7, pour que la torche 40 soit orientée d'une manière appropriée autour de l'axe 372 parallèle à l'axe de référence Z, par rapport au profil P. Cette orientation de la torche 40 correspond à l'angle KA visible sur la figure 2. Bien que ceci ne soit pas représenté, au niveau des tronçons rectilignes TR du profil P, et lorsque la vitesse d'avance du chariot 3 est constante, cette orientation KA sera de l'ordre de 40° par rapport à l'axe Y. L'orientation KA de la torche 40 est redressée jusqu'à former un angle nul par rapport à l'axe Y, au niveau des parties de tronçon TR où la vitesse du chariot 3 subit une déccélération. Similairement, l'orientation KA de la torche 40 est progressivement changée au niveau des parties de tronçon TR où le chariot 3 accélère, jusqu'à ce que l'axe longitudinal de la torche forme, en projection dans un plan parallèle à XY, un angle d'à peu près 40° par rapport à l'axe Y.

En se reportant aux figures 8 et 9, on comprend que le dispositif de commande 7 agit sur l'organe d'entraînement 54 de façon à ce que la projection expliquée ci-dessus de l'axe longitudinal de la torche 40, soit maintenue avec une orientation KA approximativement constante au niveau des tronçons curvilignes TC, par rapport à la tangente à la courbe correspondant définie par les premiers moyens de calcul 71. En effet, on voit qu'au niveau des points de jonction CP1 et CP12, les projections de l'axe longitudinal de la torche 40 respectivement désignées en 401 et 412 sont à peu près parallèles à Y. Les projections 402 à 411 sont approximativement perpendiculaires à la tangente au profil P, au niveau de leur point de passage correspondant CP2 à CP11, respectivement.

Sur la figure 7, la référence numérique 64 désigne un capteur de réglage faisant partie des moyens de détection 6. Ce capteur de réglage, qui est ici disposé au sein d'une partie fixe 42 de l'installation de soudage 4, est apte à déterminer un éloignement entre le profil P et la torche 40. Or, il ressort des figures 1, 4 et 5 de cette torche est montée à coulissement suivant un axe sensiblement parallèle Y, par rapport au chariot 3. En fait, c'est par l'intermédiaire de la pièce 38 évoquée plus haut et qui a la forme d'une potence de glissière similaire à la glissière d'éloignement désignée en 34, que la torche 40 est montée à coulissement suivant une direction MR parallèle à Y et appelée "de réglage".

Plus précisement, la glissière de réglage dont fait partie la potence 38 comprend un axe fileté 384, monté à rotation sur la potence de glissière 38. La partie filetée de l'axe 384 est vissée et traverse, par l'intermédiaire d'une douille fixe filetée, un bras 385. Ce bras 385 est monté sur la potence 38 de sorte que toute rotation de l'axe 384 entraîne un déplacement de celui-ci dans un sens correspondant suivant la direction de réglage MR. Or, on voit bien que la torche 40 est fixée à l'aide d'un boulon d'ajustement 394, sur une languette 39, elle-même vissée sur le bras 385. En conséquence, chaque déplacement suivant MR du bras 385 provoque un déplacement correspondant de la torche 40. D'autre part, on voit qu'un cinquième organe d'entraînement 55 du système 5 est monté sur la potence de glissière 38. Ici encore, cet organe 55 est constitué par un moteur pas à pas dont l'axe de sortie est solidaire en rotation de l'axe 384. Cet organe d'entraînement 55 est asservi au capteur de réglage 64, de manière à maintenir l'éloignement entre l'extrémité utile c'est-à-dire l'électrode de la torche 40 et le profil P sensiblement constant, en fonction d'une valeur de consigne prédéterminée.

Suivant l'exemple illustré, la torche 40 est une torche électrique de soudage à l'arc. Dans ce cas, le capteur de réglage 64 peut être constitué par un voltmètre apte à déterminer l'éloignement entre le profil P et la torche 40, d'après la tension de l'arc produit par cette torche. Alors, la valeur de consigne est une valeur prédéterminée de la tension de l'arc de soudage. Par exemple, l'asservissement du cinquième organe d'entraînement 55 peut maintenir la tension de l'arc générée par la torche 40 à une valeur de consigne de l'ordre 10 volts. On notera que la glissière 38 est équipée d'un capteur de fin de course 638, apte à interrompre le coulissement du bras 385 suivant MR, lorsque celui-ci atteind une position dite de remise à zéro.

On notera ici que le boulon d'ajustement 394 qui s'étend à peu près parallèlement à l'axe X, permet d'ajuster l'inclinaison de l'axe longitudinal de la torche 40, dans un plan parallèle au plan YZ. Cette inclinaison désignée en KF sur la figure 2, est maintenue, par serrage du boulon 394, et ne change pas durant le fonctionnement de la machine 1.

En se reportant de nouveau à la figure 7, on voit que le dispositif de commande 7 comprend des moyens 72, "parallèles" à ceux qui sont désignés en 71, et appelés seconds moyens de calcul. Les seconds moyens de calcul 72 sont prévus pour être actionnés lorsque les moyens 71 sont à l'arrêt. Autrement dit, ces moyens 72 ont pour fonction de gérer les déplacements de la torche 40, en alternance avec les moyens 71, au niveau de chacun des tronçons rectilignes TR du profil P. En fait, ces moyens 72 sont en général similaires aux moyens 71, à l'exception qu'ils déterminent les coordonnées des points successifs suivant lesquels la torche 40 se déplace au niveau d'un tronçon TR, non pas par extrapolation curviligne, mais extrapolation linéaire. Ces seconds moyens de calcul 72 sont donc activés tant que la tête 61 du télémètre de localisation des moyens de détection 6 n'effectue pas une mesure correspondant à la présence d'une onde OP ou OP' au sein du profil P. Le point de départ à partir duquel les seconds moyens de calcul 72 déterminent les coordonnées de points alignés sensiblement confondus avec le tronçon rectiligne TR le long duquel la torche 40 se déplace, est déterminé soit manuellement, soit lors de l'initialisation ou remise à zéro de la machine 1 et donc avant soudage, soit comme suivant le mode de réalisation illustré, à l'aide du capteur 64.

Avant de passer à la description du support fixe 2 ainsi que du fonctionnement de la machine 1, on notera que celle-ci comporte un capot 103, fixé sur les traverses 31 et 32 du châssis du chariot 3, et protégeant la plupart des organes fonctionnels montés sur ce chariot. Par ailleurs, une poignée de maniement 133 est également fixée sur le châssis du chariot 3, et plus précisement sur une face de celui-ci opposée à la torche 40. Cette poignée 133 permet le maniement et l'installation de la machine 1, ainsi que le déplacement manuel du chariot 3 par rapport au support fixe 2.

Il ressort également des figures 1, 4 et 5, que le support fixe est constitué essentiellement par un rail, dont la direction longitudinale est confondue avec la trajectoire d'avance T du chariot. Ici, le rail 22 est donc rectiligne et sensiblement parallèle à l'axe X. Ce rail 22 est constitué par un tronçon d'une longueur correspondante à celle du profil P à souder, et de l'ordre de trois mètres. Une crémaillère 221 visible sur les figures 4 et 5 est fixée sur le rail 22 parallèlement à X. Cette crémaillère 221 s'étend sur toute la longueur du rail 22, et coopère avec un pignon denté 521 solidaire en rotation du premier organe d'entraînement 51 décrit précédemment. Le pignon denté 521, dont l'axe de rotation est sensiblement parallèle à Y, est en prise avec les dentures de la crémaillère 221, de sorte que si le moteur 51 est actionné, le chariot 3 est déplacé dans un sens correspondant, le long du rail 22. Ce déplacement du chariot 3 est guidé à l'aide de deux paires de galets 322 et 312, montés à rotation sur des axes parallèles à Y, et respectivement solidaires des traverses 32 et 31 du châssis du chariot 3. Ainsi, un galet 312 et un galet 322 sont disposés de chaque côté longitudinal du rail 22. Chaque galet 312 et 322 comporte une gorge circulaire en forme de V. On voit sur la figure 4 que la face longitudinale externe de la crémaillère 221 qui est fixée sur le rail 22, à une forme correspondante à la gorge périphérique des galets 312 et 322. Parallèlement suivant X, une lame 212 est fixée sur le rail 22, et possède elle-aussi une surface en V correpondant à celle de la gorge périphérique des galets 312 et 322. La lame de guidage constituée par la face externe de la crémaillère 221, ainsi que la lame 212, coopèrent chacune avec un galet 312 et 322, de manière à guider le chariot 3 suivant T, par rapport au support fixe 2 et donc aux pièces P1 et P2.

Sur les figures, la référence numérique générale 200 désigne un mécanisme d'ancrage rapide. En fait, le support fixe 2 comporte plusieurs de ces mécanismes d'ancrage rapide 200, grâce auquel ce support peut être positionné et fixé de façon démontable sur l'une au moins des pièces à assembler .

Selon les cas, les mécanismes 200 d'ancrage rapide du support fixe 2 peuvent être constitués par des ventouses, des patins magnétiques, ou analogues. Par contre, suivant le mode de réalisation illustré, chacun de ces mécanismes d'ancrage 200 est constitué par une pince de blocage, apte à coopérer avec un noeud N pour immobiliser la machine 1 par rapport aux pièces P1 et P2 à souder.

Plus précisement, le mécanisme ou pince 200 comporte une platine 202, fixée par exemple par vissage, sur le rail 22. Un mors fixe 24 fait saillie de la face de la platine 202 en regard des pièces à souder. Le mors fixe 24 comporte deux plots de positionnement cylindriques 241 et 242 qui s'étendent à peu près parallèlement à Y. L'extrémité libre de chacun de ces plots 241 et 242 repose contre une surface plane parallèle au plan XZ, de l'une au moins des pièces à souder, et constitue donc des pieds de support. Chaque mécanisme 200 comporte également un mors mobile 23 monté à coulissement par rapport à la platine 202 suivant une direction parallèle à l'axe Z. Le mors mobile 23 qui a une forme à peu près similaire à celle du mors fixe 24, possède lui-aussi deux plots ou pieds cylindriques 231 et 232. Une tige 234 relie le mors mobile 23 a une poignée de serrage 25. Cette poignée est montée sur la platine 202 de manière à pouvoir déplacer le mors mobile 23 vers le mors fixe 24 suivant une direction parallèle à Z, et à se bloquer par arc boutement, dans une position prédéterminée lorsque le mécanisme 200 est serré. Ce serrage est obtenu quand un noeud N est pris en étau par les mors mobile et fixe 23, 24, et que la poignée 25 est immobilisée par arc boutement. On comprend que le mécanisme 200 qui vient d'être décrit est particulièrement facile à installer et à démonter, et que celui-ci garanti un positionnement solide et précis de la machine 1 sur les pièces à souder.

De plus, on voit sur la figure 7 que le chariot 3 possède un capteur 26 faisant partie des moyens de détection 6. Dans la pratique, on prévoit un ou deux capteurs 26, par exemple constitué des détecteurs de proximité à courant induit, et agissant comme des capteurs de fin de course aptes à désactiver le premier organe 51, lorsque le chariot 3 arrive à proximité de l'une des extrémités longitudinales du rail 22. Similairement, tous les axes de déplacement de la torche 40 par rapport au chariot sont équipés d'au moins un capteur de fin de course ou d'initiation.

Comme on l'a indiqué précédemment, l'installation du soudage 4 est ici un poste de soudage à l'arc. Toutefois, il est envisageable de prévoir dans la machine 1 conforme à l'invention, d'autres types de postes de soudage, brasage ou analogue, tant que ceux-ci permettent de réaliser automatiquement des points et/ou cordons de soudure.

Dans le cas présent, il est impératif que le soudage des pièces P1 et P2 soit effectué sans fusion excessive ou rochage de celles-ci. Aussi, la torche 40 choisie est du type permettant de réaliser une soudure sans apport de matière et est sous un flux de gaz inerte. A cet effet, une électrode en tungstène est prévue à l'extrémité utile de la torche 40. Cette électrode est alimentée avec un courant d'intensité de l'ordre 70 à 140 A, sous forme de pulsations générées avec une fréquence d'à peu près 16 Hz. On comprend au vu de la figure 7 que la torche 40 est reliée à une source extérieure de courant électrique industriel S42 par l'intermédiaire d'un boîtier ou partie fixe 42, auquel une source de gaz inerte G et une source de fluide de refroidissement SF (par exemple de l'eau) sont raccordées. Pour obtenir une bonne mobilité de la machine 1, le boîtier 42 est raccordé à la torche 40 par un cordon flexible ou ombilical, à l'intérieur duquel des conduits et câbles d'alimentation en courant électrique, en fluide de refroidissement et en gaz inerte de la torche 40 sont agencés. Ce cordon a une longueur déterminée en fonction de l'utilisation prévue de la machine 1, qui est dans le cas présent d'à peu près 10 m.

Le boîtier 42 qui peut être alimenté par une source S42 avec une torsion de 220 V, 320 V ou 440 V et une fréquence de 50 ou 60 Hz par exemple, comporte notamment un ondulateur d'alimentation, capable de générer un courant d'alimentation de la torche 40 dont l'intensité peut atteindre 160 A, par exemple. Pour l'ammorçage des soudures, on pourra prévoir que le boîtier de transformation de courant 42 puisse générer un courant à impulsions de haute fréquence, et provoquant ainsi des étincelles ionisant le gaz inerte qui est injecté vers l'électrode non fusible de la torche, afin qu'un arc de soudage apparaisse entre cette torche 40 et le profil P. Dans ce cas, les cordons flexibles, appareillages électriques et analogues devront être blindés et protégés contre les effets d'un tel courant à haute fréquence. Sinon, l'arc peut être crée et contrôlé lors de son apparition, par contact avec court-circuit entre l'électrode et les pièces à souder, et ce sous le contrôle du capteur 64 . On prévoira également au niveau du boîtier 42 des vannes permettant de réguler et d'interrompre l'alimentation de la torche 40 en gaz inerte, et dans le cas où cette torche est refroidie par un fluide tel que de l'eau, une vanne similaire interposée entre cette torche et la source SF.

Toujours sur la figure 7, on voit qu'un cordon flexible relie le boîtier de l'installation de soudage 4 à l'armoire 9. Un tel cordon pourra avoir une longueur importante, par exemple de 30 à 60 m. Afin de faciliter le maniement de la machine 1, l'armoire 9 pourra être montée sur des roulettes 99. Similairement, le boîtier 42 pourra aussi être monté sur des roulettes. C'est sur l'armoire 9 que le tableau principal de commande de la machine 1 par un opérateur est installé. On notera ici qu'éventuellement, les éléments structurels installés dans l'armoire 9 peuvent être alimentés séparement, par exemple par une source de courant alternatif S97, similaire à la source R42 décrite plus haut. Toutefois, il est impératif que le courant alimentant le dispositif de commande programmable 7 soit un courant redressé et filtré.

Suivant l'exemple illustré, un bouton de commande 10 à deux positions 91 permet d'obtenir un fonctionnement automatique ou manuel de la machine 1 Le bouton 92 est un commutateur tristable qui permet de commander l'avance de la torche 40 suivant T, dans un sens ou dans l'autre. Les boutons 93, 95 et 96 sont similaires au bouton 92, et agissent respectivement sur le moteur 51, le moteur 52 et le moteur 54. Le bouton 94 est un bouton d'arrêt d'urgence du fonctionnement de la machine 1.

On notera que, si le bouton 94 d'arrêt d'urgence est actionné, la machine 1 effectue une remise à zéro consistant à replacer la torche 40 dans une position prédéterminée dite d'initialisation.

Sur la figure 7, la référence numérique 8 désigne un coffret transportable de télécommande de la machine 1. A l'instar de l'armoire 9, ce coffret 8 est pourvu d'un bouton d'arrêt d'urgence 88. Pour permettre à l'opérateur en charge de la machine 1 de commander celle-ci à distance du coffret 4 et de l'armoire 9, le coffret 8 est raccordé à cette dernière par un cordon flexible ou ombilical similaire à ceux qui ont été décrits plus haut, d'une longueur de l'ordre de 15 m par exemple.

Sur la face avant du coffre 8, le bouton 83 est un interrupteur bistable qui permet de commander la mise en marche et l'arrêt de la machine 1. Le bouton 82 est similaire au bouton 92 et permet donc de commander le fonctionnement manuel ou automatique de la machine 1. L'activation du soudage peut être commandée par le bouton 84. Les boutons 85 et 87 étant respectivement un bouton commandant le placement de la machine dans la position évoquée plus haut d'inialisation ou de dégagement de la torche 40, et un organe de vérification des fonctionnements des lampes de la machine 1. Le bouton 86 permet de déterminer le type d'onde (OP ou OP') à souder. Une fois que le support 2 est monté verrouiller par rapport aux pièces P1 et P2, que le chariot 3 est monté sur le support 2, et que le poste de soudage 4, l'armoire 9 et les autres éléments de la machine 1 sont sous tension et que les alimentations en fluides auxiliaires (gaz inerte, et de refroidissement) sont ouvertes, le fonctionnement de la machine 1 peut commencer.

Alors, quatre modes de fonctionnement de la machine 1 sont possibles. Un programme approprié au fonctionnement de la machine 1 sous chacun de ces modes est mémorisé dans le dispositif de commande 7.

Le premier des modes de fonctionnement de la machine 1 est un fonctionnement entièrement automatisé permettant la réalisation de soudure continue le long du profil P. Les différents paramètres de la soudure à effectuer le long du profil P sont indiqués au dispositif 7 à l'aide des boutons de sélection décrits plus haut. Notamment, le type d'ondes, la position de soudage, et tous les paramètres nécessaires au fonctionnement de la machine 1 sont assignés.

Alors, l'opérateur actionne le bouton de départ de cycle, ce qui provoque l'initialisation ou remise à zéro de la position du chariot 3 et de la torche 40, pour tous les guidages de ceux-ci. Notamment, l'élévation suivant Y, l'angle d'orientation de la torche autour d'un axe parallèle à Z, et une position centrale de suivi S. Alors, l'opérateur doit vérifier que les alimentations de la machine 1, ainsi que sa mise à la masse sont correctement effectuées. Alors, l'opération de soudage proprement dit, peut commencer. Lors de cette opération, selon que la torche se trouve au niveau d'un tronçon rectiligne TR, ou d'un tronçon curviligne TC, les seconds moyens de calcul 72, ou exclusivement les premiers moyens de calcul 71 du dispositif 7 gèrent les déplacements de la torche 40, de la façon qui a été décrite plus haut.

L'interruption du soudage le long du profil P peut être commandée soit par l'opérateur, soit lorsque l'un des capteurs 26 de fin de course du chariot 3 par rapport au support 2, détecte la présence de ce chariot en bout de rail. Le soudage est alors interrompu et les différents axes de guidage de la torche 40, et positions des éléments mobiles de la machine 1 sont automatiquement placés dans la position de repos et d'initialisation expliqués plus haut.

Le second mode de fonctionnement de la machine 1 permet de réaliser des soudures discontinues, par exemple pour une préliaison des tôles sur les inserts. Ce mode est sensiblement identique à celui qui vient d'être expliqué, à l'exception que le sélecteur de type de soudure doit être placé sur la position "soudure discontinue". Pour les deux modes de fonctionnement qui viennent d'être évoqués, la machine 1 effectue l'amorçage de la soudure en pleine tôle, par opposition au mode de fonctionnement qui va être décrit maintenant, qui nécessite un amorssage à la volée sur un cordon déjà réalisé, et que l'on désire reprendre ou réparer.

Le troisième mode de fonctionnement de la machine 1 est un mode permettant de réparer une soudure. Ce mode consiste à reprendre une opération de soudage préalablement interrompue suite à un aléa. L'amorçage de la soudure de réparation est effectué à une vitesse faible, et sur un cordon de soudure préalablement réalisé. Ceci est nécessaire pour refondre la fin du cordon déjà réalisé et raccorder celui-ci au niveau cordon. Ce troisième mode de fonctionnement est par ailleurs sensiblement identique aux deux autres.

Toutefois, il convient de noter que dans un cas pareil, le chariot 3 a été arrêté dans une position aléatoire qui n'est donc pas reconnue par la machine 1. De fait, une remise à zéro des axes de guidage de celles-ci doit impérativement être effectuée dès que la machine 1 a été remise sous tension. Ensuite, le chariot 3 est déplacé suivant T jusqu'à l'endroit où la soudure doit être reprise. Plus précisement, on place la torche 40 au droit du tronçon rectiligne TR du profil P, située juste en aval de l'emplacement où la soudure précédente a été interrompue. Ceci permet aux premiers moyens de calcul 71 de reprendre, à partir de la détection par le télémètre de localisation 61, leurs calculs d'extrapolation ou interpolation circulaire qui ont été décrits plus haut.

La sélection de ce cycle implique de placer le bouton correspondant sur sa position "réparation".

On remarquera ici que le bouton d'impulsion de départ de soudage doit être activé uniquement suivant ce mode de soudure de réparation, et être désactivé suivant les autres modes.

Enfin, un quatrième mode de fonctionnement de la machine 1 permet d'obtenir un déplacement de la torche 40, sans que celle-ci effectue un soudage. Il suffit pour cela de placer le sélecteur approprié dans la position sans soudage. A ce moment là, la machine 1 peut simuler l'un ou l'autre des trois premiers modes de fonctionnement qui ont été décrits ci-dessus.

Evidemment, l'invention n'est nullement limitée aux modes de réalisation qui vient d'être décrit.

Entre autres, les télémètres 61 et 63, ainsi que les capteurs de détection tel que celui qui est désigné en 26, ne seront pas impérativement des télémètres laser. D'autres types de capteurs sans contact, peuvent aussi être utilisés.

Par exemple dans le cas où la mesure ou détection à effectuer se fait par rapport à une pièce métallique, des détecteurs de proximité inductifs pourront être utilisés, tandis que si la pièce mobile est dans une matière isolante, un capteur capacitif pourra par exemple être utilisé. Pour les déplacements linéaires de faible amplitude, les moteurs pas à pas peuvent être remplacés par des vérins ou analogues, comme par exemple dans le cas de l'organe d'entraînement de suivi 53 et de l'organe d'entraînement d'élévation 52.

Grâce à la machine 1 qui vient d'être décrite, on comprend qu'une soudure de haute qualité peut être obtenue de façon rapide et précise, en minimisant ainsi les interventions humaines et les coûts d'obtention de l'assemblage des pièces correspondantes.

## Revendications

1. Machine automatique d'assemblage "in situ" d'au moins deux pièces métalliques (P1, P2), par soudage suivant un profil (P) commun aux pièces, et du type comprenant un support (2) fixe par rapport aux pièces (P1, P2), un chariot (3) monté mobile sur ce support (2) et guidé suivant une trajectoire d'avance (T), une installation de soudage (4) avec une torche (40) ou analogue, montée mobile et guidée sur le chariot (3), un système de déplacement (5) du chariot et de la torche par rapport au support, des moyens de détection (6) de la position de la torche par rapport aux pièces, un dispositif de commande programmable (7), qui est connecté aux moyens de détection (6) et qui commande le système de déplacement (5) et l'installation de soudage (4), pour qu'une soudure soit réalisée par la torche (40) le long dudit profil commun (P),
caractérisée en ce que les moyens de detection comprennent des moyens de mesure comportant un télémètre de localisation (61) monté sur le chariot (3), apte à mesurer la distance entre la machine (1) et l'une des pièces, en ce que le dispositif de commande (7) est pourvu de moyens pour enregistrer sur une mémoire (7M) les coordonnées de points de passage (CP1-CP12) sur le ou les tronçons curvilignes (TC) du profil au niveau duquel la distance mesurée est en dehors d'un intervalle donné,
en ce que le dispositif de commande possède des premiers moyens de calcul qui permettent d'une part de déterminer l'emplacement desdits points de passage sur chaque tronçon curviligne (TC) en fonction du télémètre de localisation (61), et d'autre part de définir, par extrapolation circulaire entre les points de passage voisins, une série de courbes reliant ces points et sensiblement confondues avec le tronçon curviligne (TC), afin qu'à un membre donné de points de ces courbes, le système de déplacement (5) fasse correspondre l'une des positions successives de la torche (40) au niveau du tronçon curviligne (TC).

2. Machine selon la revendication 1, caractérisée en ce que la torche (40) est solidaire d'un plateau (33) monté à coulissement sur le chariot (3), suivant une direction d'élévation (Y) sensiblement parallèle à la distance mesurée par le télémètre de localisation (61) et perpendiculaire à la trajectoire d'avance (T) précitée, le système d'entraînement (5) comprenant un premier organe d'entraînement (51), tel que moteur pas à pas ou analogue, coopérant avec le support fixe (2) et solidaire du chariot (3) afin de déplacer celui-ci suivant ladite trajectoire (T), ainsi qu'un second organe d'entraînement (52), solidaire du chariot (3) et coopérant avec le plateau (33) de façon à déplacer celui-ci, et donc la torche (40), suivant ladite direction d'élévation (Y).

3. Machine selon la revendication 2, caractérisée en ce que le dispositif de commande (7) est pourvu de seconds moyens de calcul (72) qui fonctionnent en alternance avec les premiers moyens (71) précités, lorsque la torche (40) se situe au niveau d'un tronçon rectiligne (TR) du profil (P), et détermine une série de points alignés correspondants aux positions successives de la torche (40) au niveau de ce tronçon (TR), par extrapolation linéaire et en fonction d'une position d'initialisation du déplacement de la torche (40).

4. Machine selon l'une des revendications 1 à 3, caractérisée en ce que la torche (40) est montée sur le chariot (3) par l'intermédiaire d'un élément coulissant (36) suivant une direction de suivi, perpendiculaire à la trajectoire d'avance (T) ainsi qu'à la distance mesurée (Y) par le télémètre de localisation (61), le système de déplacement (5) étant pourvu d'un troisième organe d'entraînement (53) tel que moteur pas à pas ou analogue, agencé de façon à entraîner la torche (40) de part et d'autre du profil (30P) suivant la direction de suivi (Z) , alternativement dans un sens puis dans le sens opposé, et en ce que les moyens de détection (6) comportent un télémètre de suivi (63), solidaire de la torche (40) et apte à détecter la présence du profil (P) au droit de celle-ci, ledit troisième organe d'entraînement (53) étant asservi au télémètre de suivi (63) pour qu'à chaque détection par ce dernier du profil, le sens d'entraînement de la torche (40) par cet organe (53) soit inversé.

5. Machine selon la revendication 4, caractérisée en ce que les télémètres de localisation et de suivi précités, sont constitués par une tête de détection (61, 63) montée sur le chariot (3) et pourvue d'un émetteur ainsi que d'un récepteur de faisceaux laser, et par un boîtier de contrôle reliant le dispositif de commande (7) précité à la tête (61, 63), cette dernière étant disposée de façon que les faisceaux soient réfléchis par l'une ou l'autre des pièces (P1, P2) à assembler, et que la distance à mesurer ou la présence à détecter soient déterminées d'après le diamètre et/ou la longueur d'onde des faisceaux réfléchis.

6. Machine selon l'une des revendications 1 à 5, caractérisée en ce que la torche (40) est en outre montée sur le chariot par l'intermédiaire d'une articulation d'orientation (37), cette articulation permettant une rotation de la torche par rapport au support fixe (2) autour d'un axe (Z) sensiblement perpendiculaire à la trajectoire d'avance (T) et à la distance mesurée par le télémètre de localisation (ML), et en ce que le système de déplacement (5) comprend un quatrième organe d'entraînement (54), solidaire de l'articulation (37) et coopérant avec la torche (40) afin que l'orientation de celle-ci, au niveau de chaque point du tronçon curviligne (TC) du profil (P), soit maintenue approximativement constante par rapport à la tangente à la courbe correspondante définie par les premiers moyens de calcul (71) précités, et au niveau de chaque tronçon rectiligne (TR).

7. Machine selon l'une des revendications 1 à 6, caractérisée en ce que les moyens de détection (6) comprennent un capteur de réglage (64), apte à déterminer un éloignement entre le profil (P) et la torche (40), cette dernière étant montée sur une glissière (38) solidaire du chariot (3) à coulissement suivant une direction de réglage (MR) comprise dans un plan sensiblement parallèle à la trajectoire d'avance (T) et à la distance mesurée par le télémètre de localisation (61) précitées, le système de déplacement (5) comportant un cinquième organe d'entraînement (55), lui-même solidaire de la glissière (38) et asservi au capteur de réglage (64) de manière à maintenir ledit éloignement sensiblement constant, en fonction d'une valeur de consigne prédéterminée.

8. Machine selon l'une des revendications 1 à 7, caractérisée en ce que la torche (40) est une torche électrique de soudage à l'arc, avantageusement sans apport de matière et avec flux de gaz inerte, comme par exemple une torche à électrode en tungstène et flux d'argon, ou une torche à plasma.

9. Machine selon les revendications 7 et 8, carctérisée en ce que le capteur de réglage (64) précité est constitué par un voltmètre apte à déterminer l'éloignement entre le profil (P) et la torche (40), d'après la tension de l'arc produit par celle-ci, la valeur de consigne étant une valeur prédéterminée de la tension de l'arc de soudage.

10. Machine selon l'une des revendications 1 à 9, caractérisée en ce que le support fixe (2) comporte des mécanismes d'ancrage rapide (200), tel que pince de blocage, ventouse ou analogues, et grâce auxquels le support peut être positionné et fixé de façon démontable sur l'une au moins des pièces (P1, P2) à assembler.

11. Machine selon l'une des revendications 1 à 10, caractérisée en ce que le support fixe est constitué par un rail (22), par exemple en aluminium profilé, dont la direction longitudinale est confondue avec la trajectoire d'avance (T) précitée.

12. Machine selon l'une des revendications 2 et 11, caractérisée en ce qu'une crémaillère (221) coopérant avec un pignon (521) solidaire en rotation du premier organe d'entraînement (51), ainsi qu'au moins une lame de guidage (212) coopérant avec des galets (312, 322) montés à rotation sur le chariot (3), sont fixées sur le rail (22) précité, suivant sa direction longitudinale.

13. Machine selon l'une des revendications précédentes, caractérisée en ce que le dispositif de commande (7) ainsi qu'un tableau de commande de la machine (1) sont regroupés dans une armoire (9), par exemple montée sur des roulettes (99), cette armoire (9) étant raccordée par des cordons flexibles, d'une part à un pupitre de commande à distance (8) et au chariot (3), et d'autre part notamment à une partie dite fixe (42) de l'installation de soudage (4), à laquelle la torche (40) est également raccordée par un cordon flexible.

## Claims

1. Automatic machine for the "in situ" assembling of at least two metal parts (P1, P2) through welding along a profile (P) common to the parts and of the type comprising a support (2) stationary with respect to the parts (P1, P2), a carriage (3) movably mounted upon this support (2) and guided along a path of advance travel (T), a welding equipment (4) with a torch (40) or the like movably mounted and guided on the carriage (3), a system (5) for the displacement of the carriage and of the torch with respect to the support, means (6) for the detection of the position of the torch with respect to the parts, a programmable control device (7) which is connected to the detection means (6) and which controls the displacement system (5) and the welding equipment (4) in order that a weld be carried out by the torch (40) along the said common profile (P), characterized in that the detection means include measuring means comprising a locating telemeter (61) mounted onto the carriage (3) adapted to measure the distance between the machine (1) and one of the parts, in that the control device (7) is provided with means for recording on a storage (7M) the coordinates of the points of passage (CP1-CP12) on the curvilinear section or sections (TC) of the profile at the level of which the measured distance is outside of a given range, in that the control device has first calculation means which permit on the one hand to determine the position of the said points of passage on each curvilinear section (TC) as a function of the locating telemeter (61) and on the other hand to define through circular extrapolation between the neighbouring points of passage, a series of curves connecting these points and substantially coinciding with the curvilinear section (TC) in order that the displacement system (5) causes one of the successive positions of the torch (40) at the level of the curvilinear section (TC) to correspond to a given number of points of these curves.

2. Machine according to claim 1, characterized in that the torch (40) is made fast to a plate (33) mounted onto the carriage (3) for sliding along an direction of elevation (Y) substantially parallel to the distance measured by the locating telemeter (61) and perpendicular to the aforesaid path of advance travel (T), the drive system (5) comprising a first drive member (51) such as a step motor or the like co-operating with the stationary support (2) and made fast to the carriage (3) in order to displace the latter along the said path of travel (T) as well as a second drive member (52) made fast to the carriage (3) and co-operating with the plate (33) so as to displace the latter and therefore the torch (40) along the said direction of elevation (Y).

3. Machine according to claim 2, characterized in that the control device (7) is provided with second calculation means (72) which operate in alternating relationship with the aforesaid first means (71) when the torch (40) is located at the level of a rectilinear section (TR) of the profile (P) and determines a series of aligned points corresponding to the successive positions of the torch (40) at the level of this section (TR), through linear extrapolation and as a function of a position of initialisation of the displacement of the torch (40).

4. Machine according to one of claims 1 to 3, characterized in that the torch (40) is mounted onto the carriage (3) through the medium of an element (36) sliding in a follower direction perpendicular to the path of advance travel (T) as well as to the distance (Y) measured by the locating telemetrer (61), the displacement system (5) being provided with a third drive member (53) such as a step motor or the like arranged so as to carry along the torch (40) on either side of the profile (30P) in the direction of following (Z) alternately in one direction and then in the opposite direction and in that the detection means (6) comprise the follower telemeter (63) made fast to the torch (40) and adapted to sense the presence of the profile (P) being plumb with the torch, the said third drive member (53) being interlocked in follow-up relationship with the follower telemeter (63) in order that at each detection by the latter of the profile, the direction of carrying along the torch (40) by this member (53) be reversed.

5. Machine according to claim 4, characterized in that the aforesaid locating and follower telemeters are constituted by a detection head (61, 63) mounted onto the carriage (3) and provided with an emitter as well as with a receiver of laser beams and by a control box connecting the aforesaid control device (7) to the head (61, 63), the latter being disposed so that the beams be reflected by either one of the parts (P1, P2) to be assembled and so that the distance to be measured or the presence to be sensed be determined according to the diameter and/or the wave length of the reflected beams.

6. Machine according to one of claims 1 to 5, characterized in that the torch (40) is moreover mounted onto the carriage through the medium of a swivelling pivotal connection (37), this pivotal connection permitting a rotation of the torch with respect to the stationary support (2) about an axis (Z) substantially perpendicular to the path of advance travel (T) and to the distance measured by the locating telemeter (ML) and in that the displacement system (5) comprises a fourth drive member (54) made fast to the pivotal connection (37) and co-operating with the torch (40) in order that the orientation of the latter at the level of each point of the curvilinear section (TC) of the profile (P) be kept approximately constant with respect to the tangent to the corresponding curve defined by the aforesaid first calculation means (71) and at the level of each rectilinear section (TR).

7. Machine according to one of claims 1 to 6, characterized in that the detection means (6) comprise an adjusting sensor (64) adapted to determine a spacing between the profile (P) and the torch (40), the latter being mounted onto a slideway (38) made fast to the carriage (3) for sliding in a direction of adjustment (MR) lying in a plane substantially parallel to the aforesaid path of advance travel (T) and to the aforesaid distance measured by the locating telemeter (61), the displacement system (5) comprising a fifth drive member (55) itself made fast to the slideway (38) and interlocked in follow-up relationship with the adjustment sensor (64) so as to keep the said spacing substantially constant as a function of a predetermined set value.

8. Machine according to one of claims 1 to 7, characterized in that the torch (40) is a torch for electric arc welding advantageously without any filler material and with a flux of inert gas such for example as a torch with a tungsten electrode and argon flux or a plasma torch.

9. Machine according to claims 7 and 8, characterized in that the aforesaid adjustment sensor (64) is constituted by a voltmeter adapted to determine the spacing between the profile (P) and the torch (40) according to the voltage of the arc produced by the latter, the set value being a predermined value of the voltage of the welding arc.

10. Machine according to one of claims 1 to 9, characterized in that the stationary support (2) comprises quick anchoring mechanisms (200) such as a locking clamp, suction cup or the like and owing to which the support may be positioned and fastened in a removable manner onto at least one of the parts (P1, P2) to be assembled.

11. Machine according to one of claims 1 to 10, characterized in that the stationary support is constituted by a rail (22) for example of sectional aluminium, the longitudinal direction of which coincides with the aforesaid path of advance travel (T).

12. Machine according to one of claims 2 and 11, characterized in that a toothed rack (221) co-operating with a pinion (521) made fast to for rotation with the first drive member (51) as well as at least one guide strip (212) co-operating with rollers (312, 321) rotatably mounted onto the carriage (3) are fastened onto the aforesaid rail (22) along its longitudinal direction.

13. Machine according to one of the foregoing claims, characterized in that the control device (7) as well as a control panel of the machine (1) are grouped into a cabinet (9) for example mounted on casters (99), this cabinet (9) being connected by flexible lines on the one hand to a remote-control desk (8) and to the carriage (3) and on the other hand in particular to a so-called stationary portion (42) of the welding equipment (4) to which the torch (40) is also connected by a flexible line.

## Patentansprüche

1. Automatische Maschine zur "in situ" Zusammenfügung von wenigstens zwei Metallwerkstücken (P1, P2) durch Schweißen entlang einem den Werkstücken gemeinsamen Profil (P) und derjenigen Gattung mit einem in bezug auf die Werkstücke (P1, P2) ortsfesten Träger (2), einem auf diesem Träger (2) bewegbar angeordneten und entlang einem Vorschubweg (T) geführten Schlitten (3), einer Schweißanlage (4) mit einem an dem Schlitten (3) bewegbar angeordneten und geführten Brenner (40) oder dergleichen, einem System (5) zur Verschiebung des Schlittens und des Brenners in bezug auf den Träger, Mitteln (6) zur Erfassung der Stellung des Brenners in bezug auf die Werkstücke, eine programmierbare Steuervorrichtung (7), die mit den Erfassungsmitteln (6) verbunden ist und die das Verschiebungssystem (5) und die Schweißanlage (4) betätigt, damit eine Schweißung entlang des besagten gemeinsamen Profils (P) durch den Brenner (40) ausgeführt wird, dadurch gekennzeichnet, daß die Erfassungsmittel einen auf dem Schlitten (3) angeordneten und zur Messung des Abstandes zwischen der Maschine (1) und einem der Werkstücke geeigneten Ortungsentfernungsmesser (61) aufweisende Meßmittel umfassen, daß die Steuervorrichtung (7) mit Mitteln versehen ist, um in einem Speicher (7M) die Koordinaten von Durchgangspunkten (CP1-CP12) auf dem bzw. den krummlinigen Abschnitt bzw. Abschnitten (TC) des Profils, in dessen Bereich die gemessene Entfernung außerhalb eines gegebenen Meßbereichsumfangs ist, einzutragen, daß die Steuervorrichtung erste Rechenmittel hat, die es gestatten, einerseits den Ort der besagten Durchgangspunkte an jedem krummlinigen Abschnitt (TC) in Abhängigkeit des Ortungsentfernungsmessers (61) zu bestimmen und andererseits durch zirkuläre Extrapolation zwischen den benachbarten Durchgangspunkten eine Reihe von diese Punkte verbindenden und mit mit dem krummlinigen Abschnitt (TC) etwa zusammenfallenden Kurven zu bestimmen, damit das Verschiebungssystem (5) eine der aufeinanderfolgenden Stellungen des Brenners (40) im Bereich des krummlinigen Abschnitts (TC) einer gegebenen Anzahl von Punkten dieser Kurven entsprechen läßt.

2. Maschine nach Anspruch 1, dadurch gekennzeichnet, daß der Brenner (40) mit einer in einer zu dem durch den Ortungsentfernungsmesser (61) gemessenen Abstand etwa parallelen und zum vorgenannten Vorschubweg (T) senkrechten Höhenrichtung (Y) gleitbar an dem Schlitten (3) angeordneten Platte (33) fest verbunden ist, wobei das Antriebssystem (5) ein erstes mit dem ortsfesten Träger (2) zusammenwirkendes und mit dem Schlitten (3) fest verbundenes Antriebsglied (51), wie ein Schrittschaltmotor oder dergleichen, um den Schlitten entlang des besagten Weges (T) zu verschieben, sowie ein zweites mit dem Schlitten (3) fest verbundenes und mit der Platte (33) zusammenwirkendes Antriebsglied (52), um die Platte und also den Brenner (40) in der besagten Heberichtung (Y) zu verschieben, umfaßt.

3. Maschine gemäß Anspruch 2, dadurch gekennzeichnet, daß die Steuervorrichtung (7) mit zweiten Rechenmitteln (72) versehen ist, die in Abwechslung mit den vorgenannten ersten Mitteln (71) arbeiten, wenn der Brenner (40) sich mi Bereich eines geradlinigen Abschnitts (TR) des Profils (P) befindet, welche Vorrichtung eine Reihe von den aufeinanderfolgenden Stellungen des Brenners (40) im Bereich dieses Abschnitts (TR) entsprechenden fluchtend ausgerichteten Punkten durch lineare Extrapolation und in Abhängigkeit einer Stellung zur Initialisierung der Verschiebung des Brenners (40) bestimmt.

4. Maschine gemäß einem der Ansprüche 1 bis 3, dadurch gekennzeichnet, daß der Brenner (40) an dem Schlitten (3) über ein in einer senkrecht zum Vorschubweg (T) sowie zu dem durch den Ortungsentsfernungsmesser (61) gemessenen Abstand (Y) verlaufenden Folgerichtung gleitbares Element (36) angeordnet ist, wobei das Verschiebungssystem (5) mit einem dritten Antriebsglied (53), wie ein Sclrrittschaltmotor oder dergleichen versehen ist, welches angeordnet ist, um den Brenner (40) beiderseits des Profils (30P) in der Folgerichtung (Z) abwechselnd in einer Richtung und dann in der entgegengesetzten Richtung mitzunehmen und daß die Erfassungsmittel (6) einen mit dem Brenner (40) fest verbundenen und zur Ermittlung des Vorhandenseins des Profils (P) unterhalb desselben geeigneten Folgeentfernungsmesser (63) aufweisen, wobei das besagte Antriebsglied (53) dem Folgeentfernungsmesser (63) durch Nachlaufsteuerung zugeordnet ist, damit bei jeder Erfassung des Profils durch diesen, die Richtung der Mitnahme des Brenners (40) durch dieses Glied (53) umgekehrt wird.

5. Maschine nach Anspruch 4, dadurch gekennzeichnet, daß die vorgenannten Ortungs-und Folgeentfernungsmesser durch einen an dem Schlitten (3) angeordneten und mit einem Laserstrahlsender sowie einem Laserstrahlempfänger versehenen Erfassungskopf (61, 63) und durch einen die vorgenannte Steuervorrichtung (7) mit dem Kopf (61, 63) verbindenden Kontrollkasten gebildet werden, wobei dieser Kopf derart angeordnet ist, daß die Strahlungsbündel durch das eine oder durch das andere der zusammenzufügenden Werkstücke (P1, P2) zuräckgestrahlt werden und daß der zu messende Abstand oder das zu ermittelnde Vorhandensein nach dem Durchmesser und/oder der Wellenlänge der zurückgestrahlten Strahlungsbündel bestimmt werden.

6. Maschine gemäß einem der Ansprüche 1 bis 5, dadurch gekennzeichnet, daß der Brenner außerdem über ein Ausrichtungsgelenk (37) an dem Schlitten angeordnet ist, wobei dieses Gelenk eine Drehung des Brenners in bezug auf den ortsfesten Träger (2) um eine zum Vorschubweg (T) und zu dem durch den Ortungsentfernungsmesser (ML) gemessenen Abstand etwa senkrechten Achse (Z) herum gestattet und daß das Verschiebungssystem (5) ein viertes mit dem Gelenk (37) fest verbundenes und mit dem Brenner (40) zusammenwirkendes Antriebsglied (54) aufweist, damit die Ausrichtung des Brenners im Bereich jedes Punktes des krummlinigen Abschnitts (TC) des Profils (P) in bezug auf die Tangente an der durch die vorgenannten ersten Rechenmittel (71) bestimmten entsprechenden Kurve und im Bereich jedes geradlinigen Abschnitts (TR) annähernd konstant gehalten wird.

7. Maschine gemäß einem der Ansprüche 1 bis 6, dadurch gekennzeichnet, daß die Erfassungsmittel (6) einen für die Bestimmung einer Entfernung zwischen dem Profil (P) und dem Brenner (40) geeigneten Regelungsmeßwertgeber (64) aufweisen, wobei der Brenner an einer mit dem Schlitten (3) fest verbundenen Gleitschiene (38) zum Gleiten in einer Regelungsrichtung (MR) angeordnet ist, welche Richtung in einer zum Vorschubweg (T) und zum vorgenannten durch den Ortungsentfernungsmesser (61) gemessenen Abstand etwa parallelen Ebene liegt, wobei das Verschiebungssystem (5) ein fünftes Antriebsglied (55) aufweist, das selber mit der Gleitschiene (38) fest verbunden ist und dem Regelungsmeßwertgeber (64) durch Nachlaufsteuerung zugeordnet ist, um die besagte Entfernung in Abhängigkeit eines vorbestimmten Sollwertes etwa konstant zu halten.

8. Maschine nach einem der Ansprüche 1 bis 7, dadurch gekennzeichnet, daß der Brenner (40) ein elektrischer Brenner zum Lichtbogenschweißen vorteilhaft ohne Werkstoffdargebot und unter Inertgasfluß, wie z.B. ein Brenner mit Wolframelektrode und unter Argonfluß oder ein Plasmabrenner ist.

9. Maschine gemäß den Ansprüchen 7 und 8, dadurch gekennzeichnet, daß der vorgenannte Regelungsmeßwertgeber (64) durch einen Spannungsmesser gebildet wird, der geeignet ist, die Entfernung zwischen dem Profil (P) und dem Brenner (40) nach der Spannung des durch diesen erzeugten Lichtbogen zu ermitteln, wobei der Sollwert ein vorbestimmter Wert der Spannung des Schweißlichtbogens ist.

10. Maschine nach einem der Ansprüche 1 bis 9, dadurch gekennzeichnet, daß der ortsfeste Träger (2) Schnellverankerungsmittel (200), wie eine Sperrungszange, ein Saugnapf oder dergleichen aufweist, dank welchen der Träger an wenigstens einem der zusammenzufügenden Werkstücke (P1, P2) positioniert und in abnehmbarer Weise befestigt werden kann.

11. Maschine nach einem der Ansprüche 1 bis 10, dadurch gekennzeichnet, daß der ortsfeste Träger durch eine Schiene (22) z.B. aus Profilaluminium gebildet wird, deren Längsrichtung mit dem vorgenannten Vorschubweg (T) zusammenfällt.

12. Maschine nach einem der Ansprüche 2 und 11, dadurch gekennzeichnet, daß eine mit einem mit dem ersten Antriebsglied (51) drehfest verbundenen Ritzel (521) zusammenwirkende Zahnstange (221) sowie wenigstens eine mit am Schlitten (3) drehbar angeordneten Rollen (312, 322) zusammenwirkende Führungsstreifenleiste (212) an der vorgenannten Schiene (22) entlang ihrer Längsrichtung befestigt sind.

13. Maschine nach einem der vorangehenden Ansprüche, dadurch gekennzeichnet, daß die Steuervorrichtung (7) sowie eine Schalttafel zur Betätigung der Maschine (1) in einem z.B. auf Rollchen (99) angeordneten Schrank (9) zusammengefaßt sind, wobei dieser Schrank (9) durch biegsame Leitungen einerseits an ein Fernsteuerungspult (8) und an dem Schlitten (3) und andererseits insbesondere an einen sogesagten ortsfesten Teil (42) der Schweißanlage (4), an welcher der Brenner (40) ebenfalls durch eine biegsame Leitung angeschloßen ist, angeschloßen ist.
